Europäisches Patentamt

European Patent Office

Office européen des brevets

(11) Veröffentlichungsnummer: **0 476 164 A1**

(12) # EUROPÄISCHE PATENTANMELDUNG

(21) Anmeldenummer: **90117875.6**

(22) Anmeldetag: **17.09.90**

(51) Int. Cl.5: **H01G 1/08**

(43) Veröffentlichungstag der Anmeldung:
**25.03.92 Patentblatt 92/13**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Will, Norbert, Dipl.-Phys.**
**Emil-Nolde-Strasse 13**
**W-7920 Heidenheim(DE)**

(54) **Isolierscheibe mit guter Wärmekopplung für zwangsgekühlte Kondensatoren.**

(57) Eine Isolierscheibe (1) mit guter Wärmekopplung ist zwischen einem metallischen Kondensatorgehäuse (9) und einem Kühlkörper (10) angeordnet. Sie besteht aus mindestens zwei an den Rändern (4,5) zusammengeschweißten Folien (2,3), zwischen denen eine thermisch leitfähige Masse (7) angeordnet ist. Mindestens eine der Folien (2,3) ist eine Isolationsfolie.

FIG 1

Die Erfindung betrifft eine Isolierscheibe mit guter Wärmekopplung für zwangsgekühlte Kondensatoren, die insbesondere zwischen einem metallischen Kondensatorgehäuse und einem Kühlkörper angeordnet ist.

Bei der Wechselstrombelastung von Kondensatoren, insbesondere Aluminium-Elektrolytkondensatoren, entsteht Wärme, die abgeleitet werden muß, um den Kondensator nicht zu schädigen. Bei Zwangskühlung erfolgt dies vorzugsweise durch eine direkte Montage auf ein Kühlblech (z.B. Zapfenmontage). Bei Elektrolytkondensatoren ist im allgemeinen die Kathode nicht gegen das metallische Gehäuse isoliert, so daß Kondensator und Kühlblech elektrisch gegeneinander isoliert sein müssen.

Es ist bekannt, bei der Zapfenmontage Isolierscheiben einzusetzen, die zwischen dem metallischen Kondensatorgehäuse und dem Kühlkörper angeordnet sind. Derartige Isolierscheiben sind beispielsweise aus dem "Siemens-Datenbuch 1989/90, Aluminium- und Tantal-Elektrolyt-Kondensatoren" Seiten 260-262 bekannt.

Diese mindestens 1,5mm dicke Kunststoffscheibe bildet jedoch einen hohen thermischen Widerstand, wobei zusätzlich ins Gewicht fällt, daß der Boden des Kondensatorgehäuses im allgemeinen nicht plan ist, so daß zusätzliche Wärmeübergangswiderstände resultieren.

Aufgabe der Erfindung ist es, eine Isolierscheibe mit guter thermischer Leitfähigkeit anzugeben, die zusätzlich imstande ist, Unebenheiten im Boden des Kondensatorgehäuses auszugleichen.

Diese Aufgabe wird erfindungsgemäß dadurch gelöst, daß die eingangs genannte Isolierscheibe aus mindestens zwei an den Rändern zusammengeschweißten Folien besteht, zwischen denen eine thermisch leitfähige Masse angeordnet ist und daß zumindest eine der Folien eine Isolationsfolie ist.

Die Isolierscheibe kann beispielsweise aus zwei Isolationsfolien bestehen, bei denen gegebenenfalls außerhalb Metallfolien angeordnet sind.

Ferner kann die Isolierscheibe auch aus einer Metall- und einer Isolationsfolie bestehen, wobei gegebenenfalls über der Isolationsfolie wieder eine weitere Metallfolie angeordnet ist.

Wegen der Elastizität zum Ausgleich von Unebenheiten im Boden des Kondensatorgehäuses besteht die leitfähige Masse vorteilhafterweise entweder aus einer gelförmigen Leitpaste, die gegebenenfalls Metallpulver enthält oder aus einem bei Raumtemperatur oder einer erhöhten Temperatur, wie sie bei Betrieb am Kondensatorgehäuse auftreten kann, flüssigen Metall.

Der Gegenstand der Erfindung wird anhand der folgenden Ausführungsbeispiele erläutert.

In der dazugehörenden Zeichnung zeigen

Figur 1    eine aus zwei Isolationsfolien bestehende Isolierscheibe

Figur 2    eine aus zwei Isolationsfolien bestehende Isolierscheibe, bei der außerhalb zwei Metallfolien angeordnet sind und

Figur 3    eine Isolierscheibe, die aus Isolations- und Metallfolie kombiniert ist, bei der außerhalb der Isolationsfolie eine weitere Metallfolie angeordnet ist.

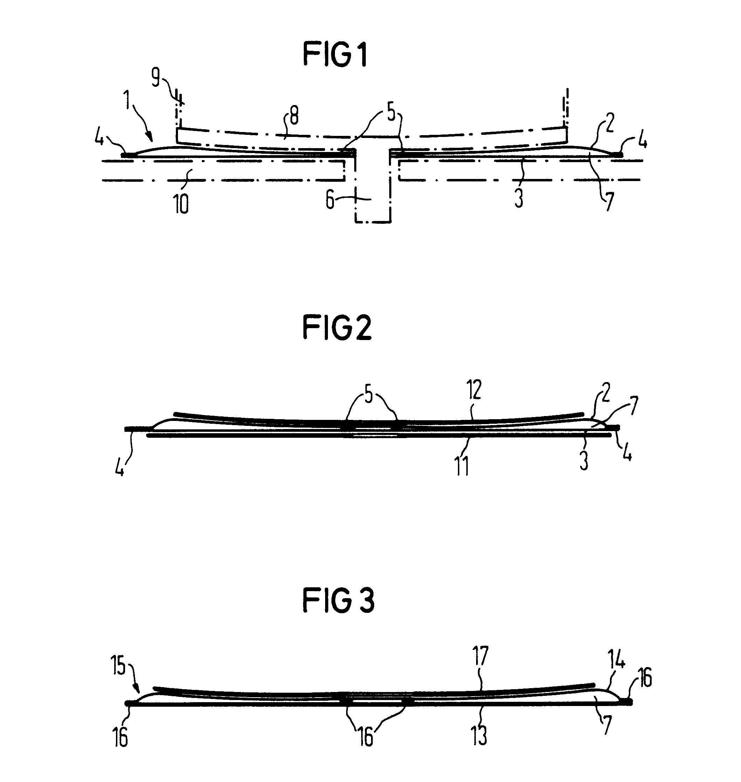

In der Figur 1 ist eine Isolationsscheibe 1 dargestellt, die aus zwei Isolationsfolien 2,3 gebildet wird, die an ihren Rändern 4 miteinander verschweißt sind. In der Mitte weist die Isolationsscheibe 1 ein Loch auf, durch das der Montagezapfen 6 geführt wird. An den inneren Rändern 5 sind die Isolationsfolien 2,3 ebenfalls miteinander verschweißt.

Zwischen den Isolationsfolien 2,3 ist eine thermisch leitfähige Masse 7 angeordnet.

In der Figur 1 ist schematisch dargestellt, wie die Isolierscheibe 1 zwischen dem Boden 8 des Kondensatorgehäuses 9 und dem Kühlblech 10 angeordnet ist. Am Boden 8 ist der Montagezapfen 6 befestigt, der zur Fixierung des Kondensatorgehäuses 9 am Kühlblech 10 dient.

In der Figur 2 ist eine Ausführungsform dargestellt, bei der die Isolierscheibe der Figur 1 an ihren Außenseiten mit zwei Metallfolien 11,12 versehen ist. Hierdurch wird eine weiterhin verbesserte Wärmekopplung zwischen Gehäuse 9 und Kühlblech 10 gewährleistet. Der Figur 2 ist zu entnehmen, daß die mittig angeordneten Bohrungen in den Metallfolien 11,12 größer als die Bohrungen in den Isolationsfolien 2,3 sind. Hierdurch wird gewährleistet, daß kein elektrisch leitfähiger Kontakt zwischen Gehäuse 9 und Kühlblech 10 entstehen kann.

In der Figur 3 ist eine weitere Ausführungsform mit verbesserter thermischer Leitfähigkeit dargestellt, bei der eine Metallfolie 13 und eine Isolationsfolie 14 eine Isolierscheibe 15 bilden. Metall-13 und Isolationsfolie 14 sind an ihren Rändern 16 miteinander verbunden, wobei im Inneren die thermisch leitfähige Masse 7 angeordnet ist. Auf der Seite der Isolationsfolie 14 kann eine weitere Metallfolie 17 angeordnet werden, die eine weitere Verbesserung der thermischen Leitfähigkeit bewirkt. Die Metallfolie 17 weist in ihrer Mitte eine größere Bohrung als die Isolierscheibe 15 auf, so daß kein elektrischer Kontakt zwischen Gehäuse 8 und Kühlblech 10 entstehen kann.

Die Isolierscheibe nach der Erfindung paßt sich sowohl dem Boden 8 als auch dem Kühlkörper 10 an, so daß ein guter thermischer Übergang gewährleistet ist. Da die im Innern angeordnete thermisch leitfähige Masse nicht austrocknen kann, bleibt diese Eigenschaft auch nach der Montage erhalten (im Gegensatz zum offenen Einsatz handelsüblicher Leitpasten).

Weiterhin besitzt die Isolierscheibe nach der Erfindung keine thermisch isolierenden Luftblasen, die beim konventionellen Einsatz von handelsüblicher Leitpaste entstehen können.

Ein weiterer Vorteil besteht darin, daß die Isolierscheibe nach der Erfindung im Gegensatz zur Anwendung von Leitpasten einfach, schnell und sauber montiert werden kann.

Als Leitpaste kann neben einer handelsüblich gelförmigen elektrisch nicht leitenden Paste auch elektrisch leitfähiges und somit auch thermisch besser leitfähiges Material eingesetzt werden, da die Verwendung mindestens einer Isolationsfolie eine elektrische Isolation zwischen Boden 8 und Kühlkörper 10 gewährleistet. Dies wird beispielsweise dadurch erreicht, daß der handelsüblichen elektrisch nicht leitfähigen Paste Metallpulver beigemengt wird oder daß als thermisch leitfähige Masse flüssige Metalle oder solche Metalle verwendet werden, die bei erhöhter Temperatur, z.B. der am Gehäuseboden 8 entstehenden Übertemperatur flüssig sind (z.B. wismuthaltige Legierungen).

Bei den Ausführungsformen nach den Figuren 2 und 3 mit außenliegenden Metallfolien kann die Isolationsfolie dünner gestaltet werden, da sie vor mechanischen und chemischen Belastungen durch die Metallfolien geschützt ist. Die Wärmeleitfähigkeit wird hierdurch ebenfalls erhöht.

Im folgenden sind Temperaturmessungen an einem Elektrolytkondensator mit Zapfenmontage angeführt, dessen Gehäuse eine Abmessung von ⌀ 75mm x 145mm besitzt (Nenndaten 3600μF/350V). Es werden dabei die Temperaturen am Gehäuseboden 8 angegeben, die bei einer Wärmeentwicklung von 80 Watt bei verschiedenen Isolierungen entstehen. Dabei betrug die Umgebungstemperatur 27° C während der Kühlkörper 10 eine Temperatur von 55° C aufwies.

Es wurde ein Kondensator mit großer Unplanheit (ca. 0,3mm) ausgewählt.

Ausführungsbeispiel 1: Es wurde eine bekannte Isolierscheibe aus 1,5mm Polypropylen gewählt. Die Temperatur des Bodens 8 betrug 124° C, so daß eine Übertemperatur von 69° C zwischen Boden und Kühlkörper resultierte.

Ausführungsbeispiel 2: Zur Isolation wurde eine 0,1mm starke Polypropylenfolie zwischen Boden und Kühlkörper angeordnet. Die Temperatur des Bodens betrug 84° C, was einer Übertemperatur von 29° C entspricht.

Ausführungsbeispiel 3: Es wurde eine 0,2mm starke Polypropylenfolie zwischen Boden und Kühlkörper angeordnet. Hierbei ergab sich eine Temperatur des Bodens von 86,5° C, was eine Übertemperatur von 31,5° C bedeutet.

Ausführungsbeispiel 4: Es wurde eine Isolierscheibe nach der Erfindung verwendet, die aus zwei, jeweils 0,1mm dicken, Polypropylenfolien bestand, die mit ca. 1,5g handelsüblicher Leitpaste gefüllt war. Hierbei betrug die Temperatur des Gehäusebodens nur noch 71° C, so daß eine Übertemperatur von 16° C zwischen Boden und Kühlkörper bestand.

Ausführungsbeispiel 5: Bei der Isolierscheibe nach Ausführungsbeispiel 4 wurde der handelsüblichen Leitpaste Aluminiumpulver beigemischt. Hierbei betrug die Temperatur des Gehäusebodens nur noch 68° C, was einer Übertemperatur von 13° C entspricht.

Den Ausführungsbeispielen ist zu entnehmen, daß durch die erfindungsgemäß ausgestaltete Isolierscheibe eine wesentlich bessere Kühlwirkung als mit den bisher bekannten Mitteln erzielt wird.

Neben der angeführten Zumischung von Aluminiumpulver können durch die Zumischung anderer Metallpulver wie z.B. Kupfer, Silber oder ähnlicher Metalle die thermischen Wärmeableitungen noch weiter verbessert werden.

Auch ist es möglich, statt der gelartigen Leitpaste ein Metallpulver mit Gleitmittel einzusetzen.

Neben der in den Ausführungsbeispielen geschilderten Anwendung kann eine Isolierscheibe nach der Erfindung auch zur Kühlung des Bechermantels oder zur Kühlung der elektrischen Kontakte zwischen Elektrolytkondensator und Stromschienen eingesetzt werden.

**Patentansprüche**

1. Isolierscheibe mit guter Wärmekopplung für zwangsgekühlte Kondensatoren, die insbesondere zwischen einem metallischen Kondensatorgehäuse und einem Kühlkörper angeordnet ist, **dadurch gekennzeichnet,** daß sie aus mindestens zwei an den Rändern (4,5,16) zusammengeschweißten Folien (2,3,13,14) besteht, zwischen denen eine thermisch leitfähige Masse (7) angeordnet ist und daß zumindest eine der Folien eine Isolationsfolie (2,3,14) ist.

2. Isolierscheibe nach Anspruch 1, **dadurch gekennzeichnet,** daß sie aus zwei Isolationsfolien (2,3) besteht.

3. Isolierscheibe nach Anspruch 1 oder 2, **dadurch gekennzeichnet,** daß außerhalb der Isolationsfolien (2,3,14) mindestens eine Metallfolie (11,12,17) angeordnet ist.

4. Isolierscheibe nach Anspruch 1, **dadurch gekennzeichnet,** daß sie aus einer Metall- (13) und einer Isolationsfolie (14) besteht.

5.  Isolierscheibe nach Anspruch 4, **dadurch gekennzeichnet,** daß über der Isolationsfolie (14) eine weitere Metallfolie (17) angeordnet ist.

6.  Isolierscheibe nach einem der Ansprüche 1 bis 5, **dadurch gekennzeichnet,** daß die leitfähige Masse (7) aus einer gelförmigen Leitpaste besteht.

7.  Isolierscheibe nach einem der Ansprüche 1 bis 6, **dadurch gekennzeichnet,** daß die leitfähige Masse (7) Metallpulver enthält.

8.  Isolierscheibe nach einem der Ansprüche 1 bis 5, **dadurch gekennzeichnet,** daß die leitfähige Masse (7) aus einem bei Raumtemperatur oder einer erhöhten Temperatur flüssigen Metall besteht.

## FIG 1

## FIG 2

## FIG 3

# EUROPÄISCHER RECHERCHENBERICHT

Nummer der Anmeldung

## EP 90 11 7875

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | WO-A-8 402 444  (HASLER AG)<br>* das ganze Dokument *<br>— — — | 1,6 | H 01 G 1/08 |
| Y | IBM TECHNICAL DISCLOSURE BULLETIN. vol. 8, no. 1, Juni 1965, NEW YORK US Seite 206 M. J. DONEGAN: "HEAT CONDUCTING WASHER"<br>* das ganze Dokument *<br>— — — | 1 | |
| A | US-A-3 586 102  (R. F. GILLES)<br>* Spalte 2, Zeilen 41 - 65; Figuren 1, 2 *<br>— — — — — | 1,2,6 | |

**RECHERCHIERTE SACHGEBIETE (Int. Cl.5)**

H 01 G
H 01 L

Der vorliegende Recherchenbericht wurde für alle Patentansprüche erstellt

| Recherchenort | Abschlußdatum der Recherche | Prüfer |
|---|---|---|
| Den Haag | 02 Mai 91 | PUHL A.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
- - - - - - - - - - - - - - - - - - - - - - - - - - - - - - - - - - -
& : Mitglied der gleichen Patentfamilie, übereinstimmendes Dokument